# EUROPEAN PATENT APPLICATION

(11) **EP 4 733 811 A1**
(43) Date of publication of application: **29.04.2026**
(21) Application number: 25208253.2
(22) Date of filing: 13.10.2025
(51) Int. Cl.: G01S 19/34, G01S 19/37

(54) **SIGNAL PROCESSING CAPTURE AND REPLAY IN A GNSS RECEIVER**

(30) Priority: 25.10.2024 US 202418927367
(71) Applicant: Avago Technologies International Sales Pte. Limited, Singapore 768923 (SG)
(72) Inventor: Warloe, Andreas, Fountain Valley, CA, 92708 (US); Abraham, Charles Raymond, Los Gatos, CA, 95033 (US)
(74) Representative: Grünecker Patent- und Rechtsanwälte PartG mbB

(57) **Abstract**

An example Global Navigation Satellite System (GNSS) receiver includes: an analog front-end (AFE) having analog circuits and configured to observe a GNSS frequency; a first circuit, coupled to the AFE, configured to power on the analog circuits during a first time period to generate a first set of digital samples from the AFE, and power off the analog circuits during a second time period after the first time period; and a digital signal processor (DSP) coupled to the AFE, the DSP configured to be powered on during the first and second time periods and configured to pass the first set of digital samples through functions to generate time delays between transmission of GNSS signals from satellites and reception at the GNSS receiver.

## Description

### BACKGROUND

Global Navigation Satellite System (GNSS) receivers can be found in various types of devices, including mobile devices, wearable devices, and the like. GNSS may refer to any satellite constellation that provides positioning, navigation, and timing services. A satellite constellation may be a group of satellites working together as a system. A GNSS system can be global or regional. Example GNSS systems include the Global Positioning System (GPS), GLONASS, Galileo, and BeiDou. The device having the GNSS receiver (sometimes referred to as a host device) may be capable of operating using power supplied by a battery ("battery power").

A GNSS receiver can receive radio frequency (RF) signals broadcast by GNSS satellites. The GNSS receiver can perform various operations in both analog and digital domains to determine position, velocity, and time (PVT) information from the RF signals. Analog operations can include amplification, down-conversion, filtering, and analog-to-digital conversion using analog circuits. Digital operations can include signal acquisition, signal tracking, baseband processing, PVT computation, and the like. In a host device operating on battery power, a GNSS receiver can draw significant power from the host device's battery. It can be impractical to perform GNSS operations in a host device operating on battery power for more than a few hours due to the power consumption of the GNSS receiver. As such, a GNSS operating mode for host devices with significantly lower power consumption by the GNSS receiver is desirable. For example, a low-power GNSS receiver can allow for extended GNSS operation of a host device operating on battery power, such "full day" or "24 hour" operation on a single charge of the battery (also known as "breadcrumbing" and "always-on" GNSS operation).

### SUMMARY

In an embodiment, a Global Navigation Satellite System (GNSS) receiver can include an analog front-end (AFE) having analog circuits and configured to observe a GNSS frequency. The GNSS receiver can include a first circuit, coupled to the AFE, configured to power on the analog circuits during a first time period to generate a first set of digital samples from the AFE, and power off the analog circuits during a second time period after the first time period. The GNSS receiver can include a digital signal processor (DSP) coupled to the AFE, the DSP configured to be powered on during the first and second time periods and configured to pass the first set of digital samples through functions to generate time delays between transmission of GNSS signals from satellites and reception at the GNSS receiver.

In another embodiment, an apparatus can include a first central processing unit (CPU) configured to execute first software. The apparatus can include a Global Navigation Satellite System (GNSS) receiver coupled to the first CPU. The first software can be configured to control the GNSS receiver to operate in a first mode. The GNSS receiver can include an analog front-end (AFE) having analog circuits and configured to observe a GNSS frequency. The GNSS receiver can include a first circuit, coupled to the AFE, configured to power on the analog circuits during a first time period to generate a first set of digital samples from the AFE, and power off the analog circuits during a second time period after the first time period. The GNSS receiver can include a digital signal processor (DSP) coupled to the AFE, the DSP configured to be powered on during the first and second time periods and configured to pass the first set of digital samples through functions to generate time delays between transmission of GNSS signals from satellites and reception at the GNSS receiver.

In another embodiment, a method of receiving a Global Navigation Satellite System (GNSS) signal can include observing, by an analog front-end (AFE) having analog circuits, a GNSS frequency. The method can include powering on, by a first circuit coupled to the AFE, the analog circuits during a first time period to generate a first set of digital samples from the AFE. The method can include powering off, by a first circuit, the analog circuits in a second time period after the first time period. The method can include powering on a digital signal processor (DSP) coupled to the AFE during the first and second time periods. The method can include processing, by a digital signal processor (DSP), the first set of digital samples through functions to generate time delays between transmission of GNSS signals from satellites and reception at the GNSS receiver.

### BRIEF DESCRIPTION OF THE DRAWINGS

Fig. 1 is a block diagram depicting a wireless device according to some embodiments.
Fig. 2 is a block diagram depicting a GNSS receiver according to some embodiments.
Fig. 3 is a block diagram depicting power control for analog circuits according to some embodiments.
Fig. 4 is a block diagram depicting power control for digital circuits according to some embodiments.
Fig. 5 is a block diagram depicting a GNSS receiver according to some other embodiments.
Fig. 6 is a block diagram depicting a pipeline of GNSS functions according to some embodiments.
Fig. 7 is a flow diagram depicting a method of using a GNSS receiver in a host device according to some embodiments.
Fig. 8 is a flow diagram depicting a method of generating digital samples at an AFE according to some embodiments.
Fig. 9 is a flow diagram depicting a method of processing a set of digital samples in a GNSS receiver according to some embodiments.

### DETAILED DESCRIPTION

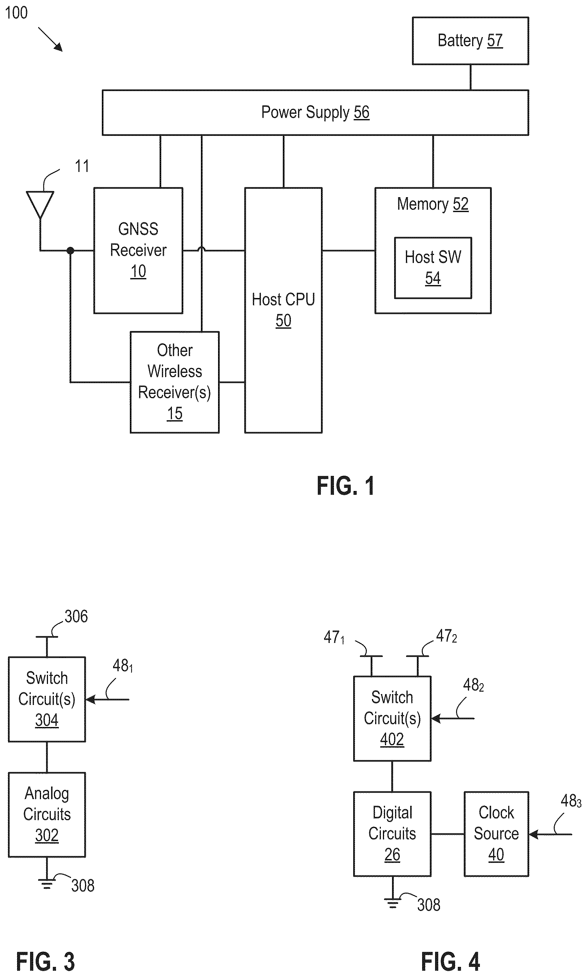

Fig. 1 is a block diagram depicting a host device 100 having a Global Navigation Satellite System (GNSS) receiver 10 according to some embodiments. A host device may be a device having a GNSS receiver. A GNSS receiver may be a circuit that can receive signals from satellites of GNSS satellite constellation(s) (referred to as GNSS signals). Receiving a GNSS signal may encompass at least one of observing GNSS frequency band(s), generating and conditioning an analog signal, generating a digital signal, and processing the digital signal, as discussed further below. Host device 100 can be a mobile device (e.g., smartphone, laptop computer, or the like), a wearable device (e.g., smartwatch, fitness tracker, or the like), or the like known in the art. GNSS receiver 10 can operate in two different modes. In a first mode, circuits in GNSS receiver 10 can be powered on to receive GNSS signal(s) continuously while GNSS receiver 10 is active (referred to as the real-time mode). In a second mode, some analog circuits in GNSS receiver 10 can be powered on to receive GNSS signal(s) and then powered down while GNSS receiver 10 is active (referred to as the capture mode). GNSS receiver 10 can consume less power in the capture mode as compared to the real-time mode.

Host device 100 can activate or deactivate GNSS receiver 10. When activated, GNSS receiver 10 can consume power. When deactivated, GNSS receiver 10 can consume less power than when active, e.g., consume no power or a de-minimis amount of power. For example, host device 100 can activate GNSS receiver 10 for use in determining PVT information. PVT information may be geographic location ("position"), velocity, or time or any combination thereof. While adjusting the duty cycle of when GNSS receiver 10 is activated and deactivated can conserve power, this can also affect determination of PVT information, such as reducing the accuracy of the PVT information (e.g., updated PVT information cannot be determined when GNSS receiver 10 is deactivated).

When activated, GNSS receiver 10 or host device 100 can select either capture mode or real-time mode. GNSS receiver 10 can consume less power when in capture mode than in real-time mode. In some embodiments, GNSS receiver 10 can be more performant when in real-time mode than in capture mode. For example, a performance measure may be PVT determinations per second. GNSS receiver 10 in real-time mode can allow for more PVT determinations per second than when in capture mode. Host device 100, however, can manage the tradeoff between power consumption and performance. For example, host device 100 can operate on battery power. While on battery power, host device 100 can use GNSS receiver 10 in capture mode to consume less power. In this manner, for example, host device 100 can obtain PVT determinations by trading off performance for improved power consumption and less drain on the battery. This allows host device 100, for example, to leave GNSS receiver 10 activated for a longer period of time to obtain updated PVT information during such time without having to deactivate GNSS receiver 10. Capture mode can provide various advantages, such as: (1) Power reduction by turning off AFE during data processing. The AFE can be a significant contributor to the overall GNSS receiver power. Traditional receivers run the AFE continuously. (2) Power reduction by throttling the DSP processing. Since DSP processing does not have to keep up with real-time data, optimal clock and voltage settings can be chosen to minimize battery power (energy) per PVT solution. (3) Additional processing. Capture mode processing can re-process the same data, refining the measurements that are used to generate the PVT solution. The results of each processing pass can be used to select the initial conditions and parameters for subsequent passes.

In some embodiments, during capture mode, the digital circuits of GNSS receiver 10 remain active both when the analog circuits are powered on and when the analog circuits are powered down. Power consumption by the digital circuits can be less than power consumption by the analog circuits, in some cases significantly less. Cycling the power supplied to the digital circuits may reduce power consumption, but the savings can be less than that saved by powering down the analog circuits and can increase complexity by requiring synchronization between cycling the power to the analog circuits and cycling the power to the digital circuits. Some embodiments described herein avoid the complexity of such synchronization by leaving the digital circuits powered on continuously during the capture mode. In traditional GNSS duty cycling, the AFE and DSP are both duty cycled. When active, the DSP is consuming the output of the AFE in real time. Power saving is achieved by reducing the percentage time that the AFE and the DSP are active, e.g. 400ms every 1s or 1s every 10s. Embodiments described herein offer improvement over existing duty cycle modes. In the embodiments, the AFE is on and AFE data can be captured for a short time window of the duty cycle active period, while the DSP is processing the AFE data in a different time window that may or may not overlap with the AFE on window, giving the benefits described above.

In some embodiments, during capture mode, the analog circuits can generate a set of digital samples when powered on. While the analog circuits are powered and while the analog circuits are powered off, the digital circuits can pass the set of digital samples through functions of a pipeline multiple times (e.g., multiple passes through the pipeline). The digital circuits can adjust parameters of the functions between different passes of the same set of digital samples. For example, the digital circuits can adjust the functions for one set of satellites in one pass and another set of satellites in another pass. Other example adjustments that can be made between processing passes of the same set of digital samples are discussed below. This can save more power than if the analog circuits and digital circuits are cycled on and off. For example, if the analog and digital circuits are both cycled on and off, then more "on" cycles can be required to adjust parameters between the "on" cycles, consuming more power than the capture mode described herein. Further, the results from processing one satellite may be used in subsequent processing of the same satellite, for example by refining initial conditions or by adjusting loop bandwidth parameters. In addition, the results from processing one or more satellites may also be used in processing other satellites, by extracting parameters pertaining to the processing of all satellites, such as clock and user motion, and using this information to guide the processing of other satellites.

In some embodiments, in the capture mode, the energy consumption of the digital circuits can be reduced while the analog circuits are powered on and while the analog circuits are powered off. For example, voltage supplied to the digital circuits can be reduced, the frequency of a clock signal supplied to the digital circuits can be reduced, or both. This can reduce energy consumption, while leaving the digital circuits powered on to perform multiple passes of the same set of digital samples generated by the analog circuits. In some embodiments, the energy consumption of the digital circuits can be adjusted dynamically between different processing passes of the same set of digital samples. For example, by running at 1/2x the frequency, processing can take 2x as long, but if the voltage can be reduced due to the slower clock, there can be a net energy benefit. Alternatively, processing can also run faster or longer than nominal, if more processing is needed, e.g., for especially "difficult" (weak, reflected, etc.) signals.

Host device 100 can include GNSS receiver 10, an antenna 11, other wireless receiver(s) 15, a central processing unit (CPU) (shown as host CPU 50), a memory 52, a power supply 56, and a battery 57. An antenna may be a device that converts an electric signal into radio waves (when transmitting) or radio waves into an electric signal (when receiving). A receiver may be a circuit that observes radio frequency band(s) to receive signal(s). GNSS receiver 10 can be coupled to antenna 11, which can convert radio waves into an electric signal. GNSS receiver 10 can observe a GNSS frequency or frequencies in the electric signal to receive GNSS signal(s). Example GNSS frequency bands are 1559-1610 MHz (e.g., L1) and 1164-1215 MHz (e.g., L5). Different satellite constellations can use different radio frequency (RF) carrier signals within the different GNSS frequency bands. An RF carrier signal may be a signal, having an RF frequency, which can be modulated by another signal (e.g., a sinusoidal signal having RF frequency). A GNSS signal can be an RF carrier signal modulated by a ranging code and a navigation message. A ranging code can be a pseudorandom sequence of bits (e.g., a pseudorandom sequence of 0's and 1's). A navigation message can be a signal that includes information on satellite positions, clock bias parameters, satellite health status, and the like. GNSS receiver 10 can be coupled to host CPU 50 and power supply 56.

Other wireless receiver(s) 15 can also be coupled to antenna 11. Alternatively, other wireless receiver(s) 15 can be coupled to one or more other antennas of host device 100 (not shown). Other wireless receiver(s) 15 can each observe frequency or frequencies in the electric signal from antenna 11 to receive other types of wireless signals. Other types of wireless signals can include, for example, cellular network signals (e.g., 4G, LTE, 5G, etc.), wireless network signals (e.g., Wi-Fi signals), short-range wireless signals (e.g., BLUETOOTH), and the like. Other wireless receiver(s) 15 can be coupled to host CPU 50 and power supply 56.

A CPU may be a circuit that can interpret and execute instructions, and manipulate data, of software. Software may be instructions and data used to operate a device. A memory may be a circuit or circuits that store information. A host CPU may be a CPU in a host device and host software may be software executed by a host CPU. Memory 52 can include volatile memory, non-volatile memory, or a combination thereof. Volatile memory may be any type of memory circuit that requires power to maintain the stored information (e.g., random-access memory (RAM)). Non-volatile memory may be any type of memory circuit that retains data even when the power is turned off or disconnected (e.g., read-only memory (ROM), erasable programmable ROM (EPROM), FLASH memory, etc.). Host CPU 50 can be coupled to memory 52 to execute host software 54 to perform software functions for host device 100. Software functions may be any operations of a device performed by hardware (e.g., circuits) executing software. Host CPU 50 can also offload tasks to hardware functions. Hardware functions may be any operations of a device performed by hardware (e.g., circuits). Host CPU 50 can cooperate with hardware functions of GNSS receiver 10 to obtain PVT information. Host CPU 50 can cooperate with hardware functions of with other wireless receiver(s) 15 to send and receive data over network(s). Host CPU 50 and memory 52 can be coupled to power supply 56.

Power supply 56 may be a circuit configured to deliver power to other circuits. Power supply 56 can include voltage sources providing different voltages for use by the circuits of host device 100. Battery 57 can be a source of power for power supply 56, which power supply 56 uses to supply the voltages to different circuits in host device 100. A battery may be a device that converts chemical energy into electrical energy.

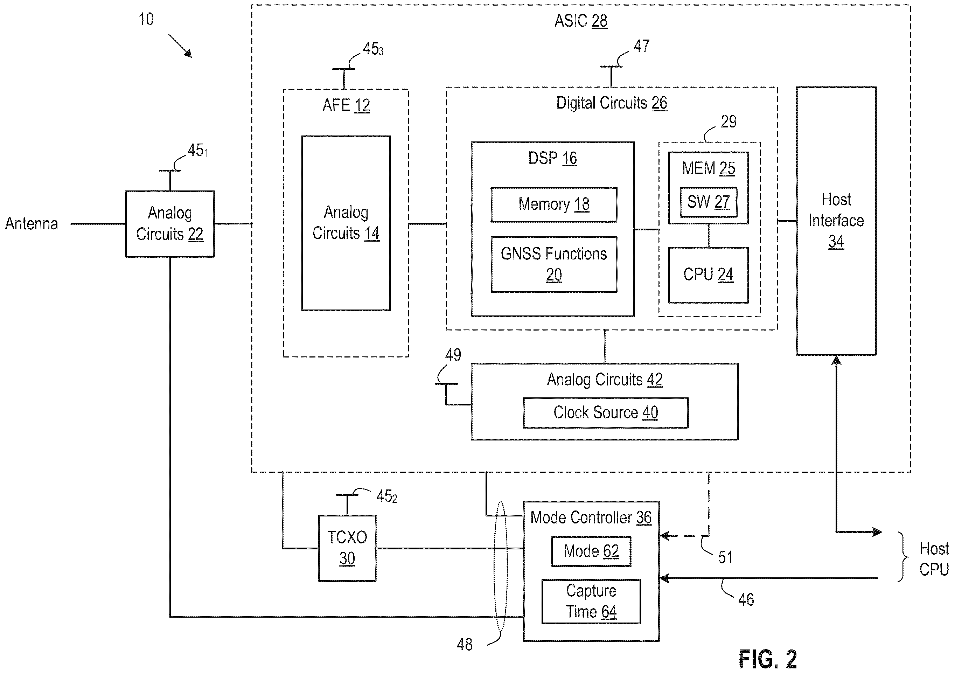

Fig. 2 is a block diagram depicting GNSS receiver 10 according to some embodiments. GNSS receiver 10 can an application specific integrated circuit (ASIC) 28 and a mode controller 36. An integrated circuit (IC) may be a circuit formed by conductive interconnect layered on a semiconductor material. An ASIC may be an IC with specific hardware functions. ASIC 28 can include hardware functions comprising an analog front-end (AFE) 12, digital circuits 26, analog circuits 42, and a host interface 34. Digital circuits 26 can include a digital signal processor (DSP) 16. AFE 12 can include analog circuits 14. Analog circuits 42 can include a clock source 40. In some embodiments, digital circuits 26 can include a processing system 29 having a CPU 24 and memory 25. CPU 24 can be coupled to memory 25 to execute software 27. In some embodiments, GNSS receiver 10 can further include analog circuits coupled to ASIC 28, such as analog circuits 22 and temperature-controlled oscillator (TCXO) 30. While TCXO 30 is shown in the embodiments, those skilled in the art will appreciate that other types of frequency sources that are analog circuits can be used, such as a temperature-sensing crystal (TSX), another ASIC, or the like.

An analog circuit may be a circuit that processes analog signal(s). An analog signal may be a signal that is continuous in time and represents some quantity (other than time, such as voltage or current). A digital circuit may be a circuit that processes digital signal(s). A digital signal may be a signal that is discrete in time and represents a quantity in discrete values (referred to as samples). Thus, a digital signal can be a sequence of samples. An AFE may be a circuit that conditions an analog signal. For example, an AFE can condition an analog signal having an RF frequency (an RF signal) for conversion to a digital signal. In some embodiments, AFE 12 can be coupled to antenna 11. AFE 12 can observe an RF frequency or RF frequencies in GNSS frequency band(s) to receive an analog signal having an RF frequency from antenna 11. Analog circuits 14 can condition the analog signal, which can include down-conversion, filtering, amplification, and analog-to-digital conversion. Down-conversion may be converting an analog signal of higher frequency to an analog signal of lower frequency. Filtering may be passing analog signals having some frequencies and attenuating or blocking analog signals having other frequencies. Amplification may be increasing the amplitude of an analog signal. Analog-to-digital conversion may be conversion of an analog signal to a digital signal. Example analog circuits 14 can include filters, amplifiers (e.g., low-noise amplifiers (LNAs), mixers, local oscillators, and an analog-to-digital converter (ADC). An example AFE 12 and example analog circuits 14 are described below.

In some embodiments, AFE 12 can receive an analog signal from analog circuits 22. Analog circuits 22 can be coupled to antenna 11. Analog circuits 22 can condition an analog signal received from antenna 11, such as amplifying the analog signal. For example, analog circuits 22 can include one or more amplifiers, such as one or more LNAs. An LNA may be a circuit that can amplify a low-power analog signal without significantly degrading its signal-to-noise ratio (SNR). In other embodiments, the functions of analog circuits 22 can be incorporated into AFE 12 (e.g., in analog circuits 14). In some embodiments, AFE 12 can receive an oscillator signal from a frequency source, e.g., TCXO 30. A frequency source may be an analog circuit that generates an oscillator signal. A TCXO may be an analog circuit that uses a temperature-sensitive crystal to generate an oscillator signal having a constant frequency over a range of temperatures. An oscillator signal may be a signal having oscillating amplitude (e.g., a periodic fluctuation in amplitude between two values). AFE 12 can use the oscillator signal from TCXO 30 as a reference frequency, e.g., for down-conversion(s).

A DSP may be a circuit with hardware functions that process digital signals. For example, a DSP can be a microprocessor or microcontroller designed specifically for the efficient and real-time processing of digital signals. Unlike general-purpose processors, such as CPUs, a DSP can be optimized for numeric calculations, such as those involving multiplication and addition, which can be fundamental to digital signal processing tasks, such as filtering, demodulation, transforms, and the like. DSP 16 can receive a digital signal from AFE 12. DSP 16 can include GNSS functions 20. A GNSS function can be any type of digital signal processing function used to process GNSS signals. Example GNSS functions 20 include digital signal conditioning functions, such as those used for filtering and/or signal enhancement (e.g., noise reduction, interference mitigation, multipath mitigation, etc.). Example GNSS functions 20 further include correlation and integration functions, such as those used for GNSS signal acquisition, tracking, satellite detection, and the like. GNSS functions 20 can be organized into a pipeline. A pipeline may be a set of functions, some or all of which can operate concurrently, and/or some or all of which can operate sequentially, where the input of some function(s) can be the output of other function(s). DSP 16 can include a memory 18 for storing a set of digital samples output from AFE 12. DSP 16 can pass a set of digital samples stored in memory 18 through GNSS functions 20 to generate results. DSP 16 can pass the same set of digital samples stored in memory 18 through GNSS functions 20 multiple times to generate multiple sets of results. DSP 16 can store results of passing samples through GNSS functions 20 in memory 18.

Analog circuits 42 can support operation of digital circuits 26. For example, analog circuits 42 can include clock source 40 that can supply clock signal(s) to digital circuits 26. Analog circuits 42 can include other types of circuits, such as analog circuits that support input/output for digital circuits 26. Host interface 34 can be a circuit that provides input/output between ASIC 28 and host CPU 50.

In some embodiments, digital circuits 26 can include processing system 29. In such embodiments, DSP 16 can supply results from processing digital samples through GNSS functions 20 to processing system 29. CPU 24 can execute software 27 stored in memory 25 to process the results from DSP 16. For example, DSP 16 can generate results as time delays between transmission of GNSS signals from satellites and reception of the GNSS signals at GNSS receiver 10. CPU 24 can execute software 27 to translate the time delays into ranges between GNSS receiver 10 and the satellites. CPU 24 can execute software 27 to determine PVT information from the ranges. In other embodiments, DSP 16 can generate results as ranges between GNSS receiver 10 and the satellites and CPU 24 can execute software 27 to determine PVT information from the ranges. In other embodiments, processing system 29 can be omitted and DSP 16 can provide results (e.g., time delays or ranges) to host CPU 50, which can execute host software 54 to determine ranges or PVT information.

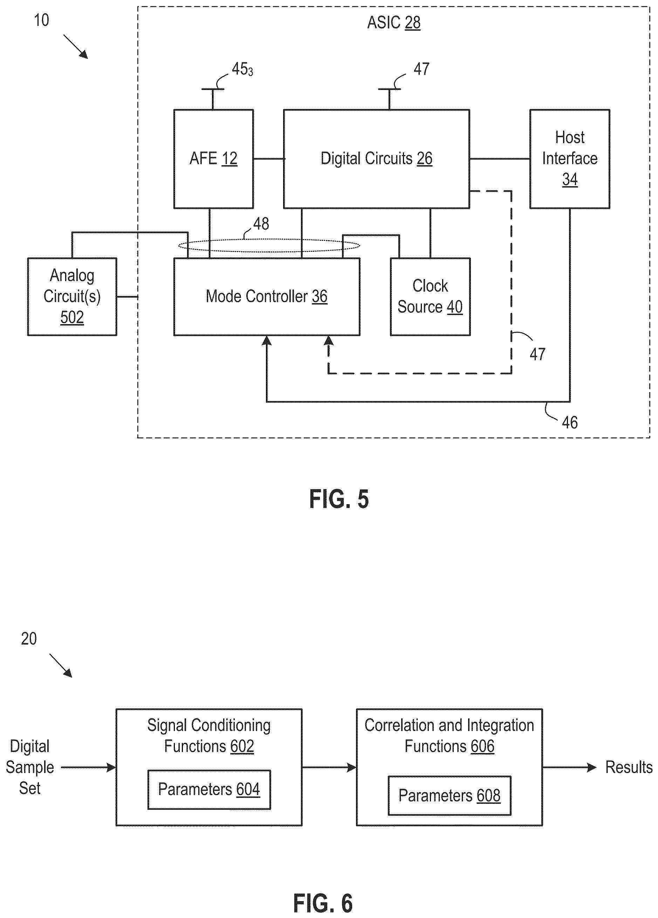

A mode controller may be a circuit that controls a mode of operation. Mode controller 36 can control a mode 62 for GNSS receiver 10, which can be capture mode or real-time mode. In some embodiments, mode controller 36 can be implemented using circuits external to ASIC 28 (as shown in Fig. 2). In other embodiments, mode controller 36 can be implemented using circuits in ASIC 28 (as shown in Fig. 5). Mode controller 36 can receive input 46 from host CPU 50 to control mode 62. Alternative to input 46, or in addition to input 46, mode controller 36 can receive input 51 from ASIC 28 to control mode 62.

Mode controller 36 can be coupled to ASIC 28. Mode controller 36 can provide control signal(s) 48 to ASIC 28 for controlling power consumption of circuits in ASIC 28. In the capture mode, mode controller 36 can maintain a capture time 64. Mode controller 36 can power on analog circuits 14 in AFE 12 during a capture period and power off analog circuits 14 in AFE 12 during a quiescent period. In some embodiments, mode controller 36 can trigger the capture period in response to request(s) on input 46 and/or input 51. The quiescent period is any time other than the capture period. The duration of the capture period can be controlled by capture time 64. Capture time 64 can be set to a default value and/or can be controlled via input 46 and/or input 51. Analog circuits 14 in AFE 12 can receive voltage from a voltage supply 45₃. Mode controller 36 can connect AFE 12 to voltage supply 45₃ during the capture period and disconnect AFE 12 from voltage supply 45₃ during the quiescent period.

Mode controller 36 can be coupled to analog circuits 22 (if present) and/or TCXO 30. Mode controller 36 can provide control signal(s) 48 to analog circuits 22 and/or TCXO 30 for controlling power consumption thereof. Analog circuits 22 can receive voltage from a voltage supply 45₁. TCXO 30 can receive voltage from a voltage supply 45₂. In some embodiments, mode controller 36 can further control analog circuits 22 and/or TCXO 30. Mode controller 36 can connect analog circuits 22 to voltage supply 45₁ during the capture period and disconnect analog circuits 22 from voltage supply 45_{!} during the quiescent period. Likewise, mode controller 36 can connect TCXO 30 to voltage supply 45₂ during the capture period and disconnect TCXO 30 from voltage supply 45₂ during the quiescent period. Voltage supplies 45₁...45₃ can be voltage source(s) in power supply 56 that supply voltage for analog circuits.

Digital circuits 26 can receive voltage from a voltage supply 47. Analog circuits 42 can receive voltage from a voltage supply 49. Digital circuits 26 are not disconnected from power during the quiescent period, but rather can remain powered on during both the capture period and the quiescent period. Analog circuits 42, which support digital circuits 26, can also remain powered on during both the capture and quiescent periods. Voltage supply 49 can be the same or different voltage source(s) in power supply 56 as used for voltage supplies 45₁...45₃. Voltage supply 47 can be voltage source(s) in power supply 56 that supply voltage for digital circuits.

In some embodiments, mode controller 36 can increase or reduce power consumption of digital circuits 26 in the capture mode during either in the capture period, the quiescent period, or both periods. For example, mode controller 36 can connect digital circuits 26 to different voltage supplies to change power consumption. Mode controller 36 can increase or decrease frequency of clock signal(s) generated by clock source 40 used by digital circuits 26 to change power consumption. Mode controller 36 can both control voltage supply and clock frequency to adjust power consumption by digital circuits 26. For example, mode controller 36 can select a lower voltage supply and/or lower clock frequency in the capture mode for digital circuits 26 than in the real-time mode. In another example, mode controller 36 can select between lower and higher voltage supplies and/or lower and higher clock frequencies dynamically during the capture mode based on input 46 and/or input 51.

In the real-time mode, mode controller 36 can suspend its power control functions. For example, mode controller 36 can suspend control of voltage supply 45₃ for analog circuits 14. Mode controller 36 can suspend control of voltage supply 45₁ for analog circuits 22 (if present). Mode controller 36 can suspend control of voltage supply 45₃ for TCXO 30. Mode controller 36 can suspend control of voltage supply 47 to digital circuits 26.

Fig. 3 is a block diagram depicting power control for analog circuits according to some embodiments. Analog circuits 302 can be coupled to voltage supply 306 through switch circuit(s) 304. For example, analog circuits 302 can be any analog circuits in GNSS receiver 10 under control of mode controller 36. Voltage supply 306 can be any of voltage supplies 45₁...45₃. Switch circuit(s) 304 may be circuit(s) for connecting or disconnecting analog circuits 302 from voltage supply 306. Voltage supply 306 can supply one or more voltages to analog circuits 302 with respect to a reference voltage 308 (e.g., electrical ground). Mode controller 36 can supply signal(s) 48₁ to control switch circuit(s) 304. For example, in capture mode, during the capture period, mode controller 36 can control switch circuit(s) 304 to connect voltage supply 306 to analog circuits 302. In the capture mode, during the quiescent period, mode controller 36 can control switch circuit(s) 304 to disconnect voltage supply 306 from analog circuits 302. In the real-time mode, mode controller 36 can suspend power control, setting switch circuit(s) 304 to connect voltage supply 306 to analog circuits 302 continuously throughout the real-time mode.

Fig. 4 is a block diagram depicting power control for digital circuits according to some embodiments. Digital circuits 26 can be coupled to voltage supplies 47₁ and 47₂ through switch circuit(s) 402. Switch circuit(s) 402 may be circuit(s) for connecting digital circuits 26 to either voltage supply 47₁ or voltage supply 47₂. Voltage supply 47₁ can supply one or more voltages to digital circuits 302 with respect to reference voltage 308 (e.g., electrical ground). Voltage supply 47₂ can supply one or more different voltages to digital circuits 302 with respect to reference voltage 308. For example, voltage supply 47₁ can supply lower voltage(s) than voltage supply 47₂.

Mode controller 36 can supply signal(s) 48₂ to control switch circuit(s) 402. For example, in capture mode, during the capture period, quiescent period, or both, mode controller 36 can control switch circuit(s) 402 to change the voltage supplied to digital circuits 402 (e.g., from lower to higher or higher to lower). Mode controller 36 can supply signal(s) 48₃ to control clock source 40. For example, in capture mode, during the capture period, quiescent period, or both, mode controller 36 can control clock source 40 to change clock frequency. In the real-time mode, mode controller 36 can suspend power control of digital circuits 26.

Fig. 5 is a block diagram depicting GNSS receiver 10 according to some other embodiments. Elements in Fig. 5 that are the same or similar to those of Fig. 2 are designated with identical reference numerals. The embodiment of Fig. 5 differs from that of Fig. 2 in that mode controller 36 can be part of ASIC 28, rather than implemented external to ASIC 28. ASIC 28 can be coupled to analog circuits 502 external to ASIC 28 (e.g., analog circuits 22, TCXO 30). Mode controller 36 can provide control signals 48 to analog circuits 502 as described above for analog circuits 22 and TCXO 30. ASIC 28 and mode controller 36 can operate as described above in Fig. 2.

Fig. 6 is a block diagram depicting a pipeline of GNSS functions 20 according to some embodiments. GNSS functions 20 can include signal conditioning functions 602 and correlation and integration functions 606. Signal conditioning functions may be functions of a DSP for conditioning a digital signal. Signal conditioning functions 602 can include, for example, noise reduction, interference mitigation, multipath mitigation, and the like functions. Signal conditioning functions 602 can be implemented using one or more digital filters. Signal conditioning functions 602 can have parameters 604, which can be adjusted to control the functions. Correlation and integration functions may be functions of a DSP for determining time delays between transmission of GNSS signals from satellites and reception of the GNSS signals are GNSS receiver 10. Correlation and integration functions 606 can include parameters 608, which can be adjusted to control the functions. GNSS functions 20 can include other functions, such as a range function for determining ranges from GNSS receiver to satellites from time delays. A digital sample set generated by AFE 12 can be processed through signal conditioning functions 602 and correlation and integration functions 606 multiple times (referred to as passes). DSP 16 can adjust parameters 604 and/or parameters 608 between passes. For example, DSP 16 can perform one pass over digital sample set with parameters 604 and/or 608 set for one set of satellites and another pass over digital sample set with parameters 604 and/or 608 set for another set of satellites. In another example, tracking weak GNSS signals can be done using loop processing and applying the narrowest possible bandwidth, but factors such as signal attenuation, user movement, and clock perturbations can make this challenging. By using multiple passes, and initial rough estimate of signal trajectory can be refined, using either information from the previous pass of the same satellite or by using information from other satellites or both. For very weak signals, it is also possible to run multiple passes with multiple hypothesis of the signal trajectory, selecting the pass with the highest resulting Signal to Noise ratio.

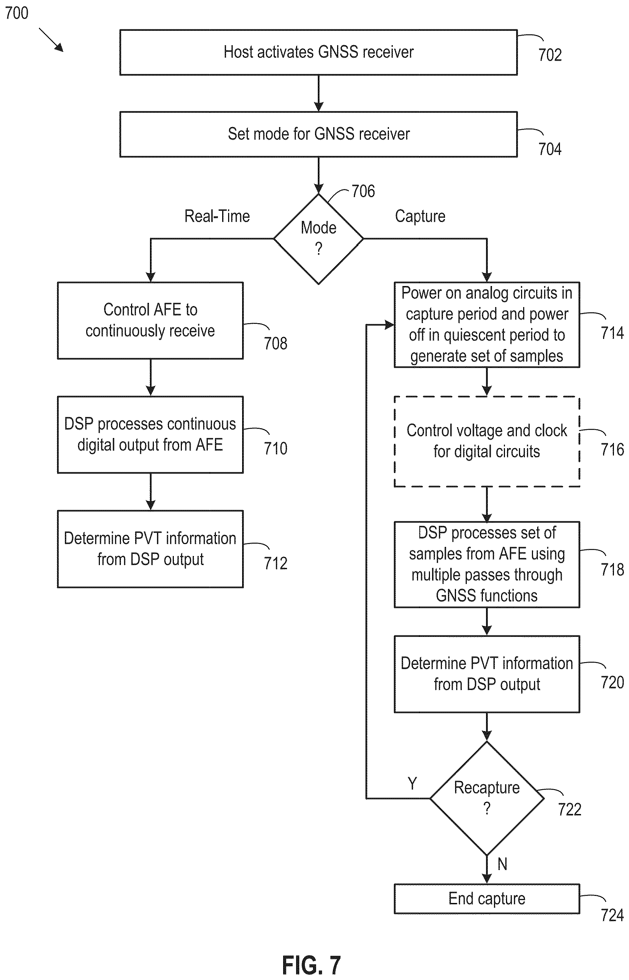

Fig. 7 is a flow diagram depicting a method 700 of using a GNSS receiver in a host device according to some embodiments. Method 700 begins at step 702, where the host (e.g., host CPU 50) can activate GNSS receiver 10. At step 704, the host can set the mode of GNSS receiver 10 (e.g., capture mode or real-time mode). At step 706, if the mode is the real-time mode, method 700 branches to step 708. If the mode is the capture mode, method 700 branches to step 714. At step 708, mode controller 36 can control AFE 12 to be powered on continuously to receive and generate a stream of digital samples. Likewise, mode controller 36 can control any external analog circuits (e.g., analog circuits 22 and TCXO 30) to be powered on continuously. At step 710, DSP 16 can process the continuous stream of digital samples output from AFE 12. Mode controller 36 can suspend any power control of DSP 16 in the real-time mode. At step 712, PVT information can be determined based on results generated by DSP 16. PVT information can be determined by digital circuits 26 in GNSS receiver 10 or by host CPU 50 executing host software 54.

At step 714, in the capture mode, mode controller 36 can power on analog circuits 14 in the capture period and power off analog circuits 14 in the quiescent period to generate a set of digital samples. As discussed above, mode controller 36 can also power on external analog circuits (e.g., analog circuits 22 and TCXO 30) during the capture period and power off the external analog circuits during the quiescent period. At optional step 716, mode controller 36 can control voltage supply and/or clock frequency for digital circuits 26. For example, mode controller 36 can control digital circuits 26 for lower power consumption in capture mode. In another example, mode controller 36 can control digital circuits 26 for higher power consumption for a pass(es) of the digital sample set through GNSS functions 20, and then lower power consumption for other pass(es) of the digital sample set through GNSS functions 20.

At step 718, DSP 16 processes the set of digital samples through GNSS functions 20 using multiple passes. At step 720, PVT information can be determined from the results generated by DSP 16. PVT information can be determined by digital circuits 26 in GNSS receiver 10 or by host CPU 50 executing host software 54.

At step 722, a determination can be made as to whether another set of digital samples should be captured (e.g., recapture). This determination can be made by digital circuits 26 or by host CPU 50. If so, method 700 can return to step 714 and repeat. Otherwise, method 700 can proceed to step 724 and end.

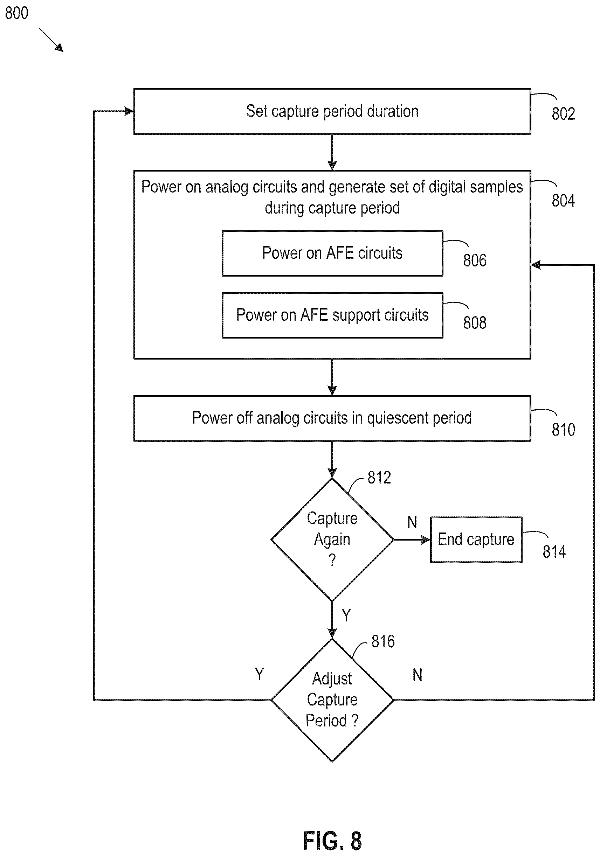

Fig. 8 is a flow diagram depicting a method 800 of generating digital samples at an AFE according to some embodiments. Method 800 can be performed in the capture mode. Method 800 begins at step 802, where mode controller 36 sets the capture period duration. Mode controller 36 can set the capture period duration based on input from digital circuits 26 or host CPU 50. At step 804, where mode controller 36 powers on analog circuits in GNSS receiver 10 and generates a set of digital samples during the capture period. For example, at step 806, mode controller 36 can power on analog circuits 14 in AFE 12. At step 808, mode controller 36 can power on external analog circuits (e.g., analog circuits 22, TCXO 30). At step 810, mode controller 36 can power off the analog circuits in the quiescent period. At step 812, a determination can be made as to whether to capture another set of digital samples. This determination can be made by digital circuits 26 or by host CPU 50. If not, method 800 ends at step 814. Otherwise, method 800 proceeds to step 816. At step 816, a determination is made as to whether the capture period should be adjusted. This determination can be made by digital circuits 26 or by host CPU 50. If not, method 800 can branch to step 804 and repeat. If so, method 800 can branch to step 802 and repeat.

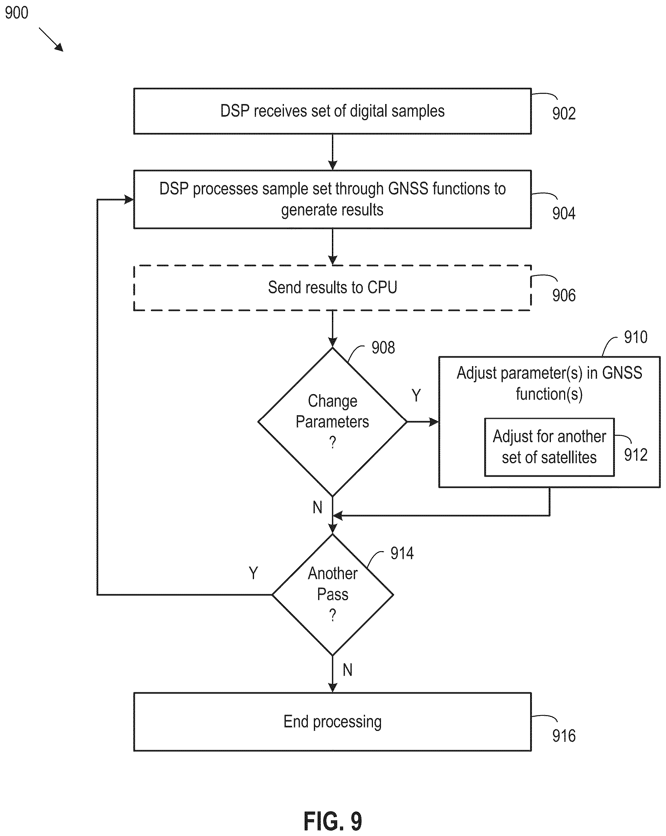

Fig. 9 is a flow diagram depicting a method 900 of processing a set of digital samples in a GNSS receiver according to some embodiments. Method 900 can be performed in the capture mode. Method 900 begins at step 902, where DSP 16 can receive a set of digital samples from AFE 12. At step 904, DSP 16 can process the sample set through GNSS functions 20 to generate results. At step 906, DSP 16 can optionally send the results to a CPU (e.g., host CPU 50 or CPU 24). At step 908, a determination can be made as to whether parameter(s) of GNSS functions 20 should be changed. This determination can be made by DSP 16, by host CPU 50, or by CPU 24. If so, method 900 proceeds to step 910, where DSP 16 can adjust parameter(s) in GNSS function(s) 20. For example, at step 912, DSP 16 can adjust parameter(s) for a different set of satellites. Method 900 proceeds from step 910 to step 914. If at step 908 there are no parameter changes, method 900 proceeds to step 914. At step 914, DSP 16 determines if there should be another pass. If so, method 900 proceeds to step 904 and repeats. If not, method 900 proceeds to step 916 and ends.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C ," or alternatively, "at least one of A, at least one of B, and at least one of C," it is expressly described as such.

It will be understood that, although the terms "first," "second," etc. may be used herein to describe various elements, these elements should not be limited by these terms. These terms are only used to distinguish one element from another. For example, a first element could be termed a second element, and, similarly, a second element could be termed a first element, without departing from the scope of the present disclosure.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

The following are further embodiments of the invention:
1. A Global Navigation Satellite System (GNSS) receiver, comprising:
   an analog front-end (AFE) having analog circuits and configured to observe a GNSS frequency;
   a first circuit, coupled to the AFE, configured to power on the analog circuits during a first time period to generate a first set of digital samples from the AFE, and power off the analog circuits during a second time period after the first time period; and
   a digital signal processor (DSP) coupled to the AFE, the DSP configured to be powered on during the first and second time periods and configured to pass the first set of digital samples through functions to generate time delays between transmission of GNSS signals from satellites and reception at the GNSS receiver.
2. The GNSS receiver of embodiment 1, wherein the DSP is configured to perform a first pass of the first set of digital samples through the functions during the first time period and perform another pass of the first set of digital samples through the functions during the second time period.
3. The GNSS receiver of embodiment 1, wherein the DSP is configured to adjust at least one of the functions between a first pass and a second pass of the first set of digital samples.
4. The GNSS receiver of embodiment 3, further comprising:
   a central processing unit (CPU) coupled to the DSP and configured to receive the time delays as generated by the DSP, the CPU further configured to execute software to process the time delays and control the DSP to adjust at least one of the functions between a first pass and a second pass of the first set of digital samples.
5. The GNSS receiver of embodiment 4, wherein the DSP or the CPU executing the software is configured to adjust the at least one of the functions to switch between first satellites for the first pass and second satellites for the second pass.
6. The GNSS receiver of embodiment 3, wherein the functions include first functions for conditioning of the first set of digital samples, wherein the at least one function is at least one of the first functions, and wherein the DSP is configured to adjust at least one parameter of the at least one first function.
7. The GNSS receiver of embodiment 3, wherein the functions include first functions for correlating and integrating the first set of digital samples, wherein the at least one function is at least one of the first functions, and wherein the DSP is configured to adjust at least one parameter of the at least one first function.
8. The GNSS receiver of embodiment 1, wherein the analog circuits are first analog circuits, wherein the GNSS receiver is coupled to a second analog circuit, and wherein the first circuit is configured to power on the second analog circuit during the first time period and power off the second analog circuit during the second time period.
9. The GNSS receiver of embodiment 1, wherein the first circuit is configured to, during the first time period, during the second time period, or both, at least one of reduce the power supplied to the DSP or reduce the frequency of a clock signal supplied to the DSP.
10. The GNSS receiver of embodiment 1, wherein the first circuit is coupled to the DSP and is configured to, in response to an output from the DSP, at least one of reduce the power supplied to the DSP or reduce the frequency of a clock signal supplied to the DSP between a first pass and a second pass of the first set of digital samples.
11. An apparatus, comprising:
   a first central processing unit (CPU) configured to execute first software; and
   a Global Navigation Satellite System (GNSS) receiver coupled to the first CPU;
   the first software configured to control the GNSS receiver to operate in a first mode;
   the GNSS receiver including:
      an analog front-end (AFE) having analog circuits and configured to observe a GNSS frequency;
      a first circuit, coupled to the AFE, configured to power on the analog circuits during a first time period to generate a first set of digital samples from the AFE, and power off the analog circuits during a second time period after the first time period; and
      a digital signal processor (DSP) coupled to the AFE, the DSP configured to be powered on during the first and second time periods and configured to pass the first set of digital samples through functions to generate time delays between transmission of GNSS signals from satellites and reception at the GNSS receiver.
12. The apparatus of embodiment 11, wherein the first software is configured to control the GNSS receiver to operate in a second mode, wherein the first circuit is configured to power on the analog circuits continuously during the second mode to generate a digital signal, and wherein the DSP is configured to process the digital signal.
13. The apparatus of embodiment 11, wherein the DSP is configured to adjust at least one of the functions between a first pass and a second pass of the first set of digital samples.
14. The apparatus of embodiment 11, wherein the first circuit is configured to, during the first time period, during the second time period, or both, at least one of reduce the power supplied to the DSP or reduce the frequency of a clock signal supplied to the DSP.
15. The apparatus of embodiment 11, wherein the first circuit is coupled to the DSP and is configured to, in response to an output from the DSP, at least one of reduce the power supplied to the DSP or reduce the frequency of a clock signal supplied to the DSP between a first pass and a second pass of the first set of digital samples.
16. A method of receiving a Global Navigation Satellite System (GNSS) signal, comprising:
   observing, by an analog front-end (AFE) having analog circuits, a GNSS frequency;
   powering on, by a first circuit coupled to the AFE, the analog circuits during a first time period to generate a first set of digital samples from the AFE; and
   powering off, by a first circuit, the analog circuits in a second time period after the first time period;
   powering on a digital signal processor (DSP) coupled to the AFE during the first and second time periods; and
   processing, by a digital signal processor (DSP), the first set of digital samples through functions to generate time delays between transmission of GNSS signals from satellites and reception at the GNSS receiver.
17. The method of embodiment 16, wherein the DSP is configured to perform a first pass of the first set of digital samples through the functions during the first time period and perform another pass of the first set of digital samples through the functions during the second time period.
18. The method of embodiment 17, wherein the DSP is configured to adjust at least one of the functions between a first pass and a second pass of the first set of digital samples.
19. The method of embodiment 17, wherein the first circuit is configured to, during the first time period, during the second time period, or both, at least one of reduce the power supplied to the DSP or reduce the frequency of a clock signal supplied to the DSP.
20. The method of embodiment 16, wherein the first circuit is coupled to the DSP and is configured to, in response to an output from the DSP, at least one of reduce the power supplied to the DSP or reduce the frequency of a clock signal supplied to the DSP between a first pass and a second pass of the first set of digital samples.

## Claims

1. A Global Navigation Satellite System (GNSS) receiver, comprising:
an analog front-end (AFE) having analog circuits and configured to observe a GNSS frequency;
a first circuit, coupled to the AFE, configured to power on the analog circuits during a first time period to generate a first set of digital samples from the AFE, and power off the analog circuits during a second time period after the first time period; and
a digital signal processor (DSP) coupled to the AFE, the DSP configured to be powered on during the first and second time periods and configured to pass the first set of digital samples through functions to generate time delays between transmission of GNSS signals from satellites and reception at the GNSS receiver.

2. The GNSS receiver of claim 1, wherein the DSP is configured to perform a first pass of the first set of digital samples through the functions during the first time period and perform another pass of the first set of digital samples through the functions during the second time period.

3. The GNSS receiver of one of the previous claims, wherein the DSP is configured to adjust at least one of the functions between a first pass and a second pass of the first set of digital samples.

4. The GNSS receiver of claim 3, further comprising:
a central processing unit (CPU) coupled to the DSP and configured to receive the time delays as generated by the DSP, the CPU further configured to execute software to process the time delays and control the DSP to adjust at least one of the functions between a first pass and a second pass of the first set of digital samples,
in particular,
wherein the DSP or the CPU executing the software is configured to adjust the at least one of the functions to switch between first satellites for the first pass and second satellites for the second pass.

5. The GNSS receiver of claim 3, wherein the functions include first functions for conditioning of the first set of digital samples, wherein the at least one function is at least one of the first functions, and wherein the DSP is configured to adjust at least one parameter of the at least one first function
and/or
wherein the functions include first functions for correlating and integrating the first set of digital samples, wherein the at least one function is at least one of the first functions, and wherein the DSP is configured to adjust at least one parameter of the at least one first function.

6. The GNSS receiver of one of the previous claims, wherein the analog circuits are first analog circuits, wherein the GNSS receiver is coupled to a second analog circuit, and wherein the first circuit is configured to power on the second analog circuit during the first time period and power off the second analog circuit during the second time period
and/or
wherein the first circuit is configured to, during the first time period, during the second time period, or both, at least one of reduce the power supplied to the DSP or reduce the frequency of a clock signal supplied to the DSP.

7. The GNSS receiver of one of the previous claims, wherein the first circuit is coupled to the DSP and is configured to, in response to an output from the DSP, at least one of reduce the power supplied to the DSP or reduce the frequency of a clock signal supplied to the DSP between a first pass and a second pass of the first set of digital samples.

8. An apparatus, comprising:
a first central processing unit (CPU) configured to execute first software; and
a Global Navigation Satellite System (GNSS) receiver coupled to the first CPU;
the first software configured to control the GNSS receiver to operate in a first mode;
the GNSS receiver including:
an analog front-end (AFE) having analog circuits and configured to observe a GNSS frequency;
a first circuit, coupled to the AFE, configured to power on the analog circuits during a first time period to generate a first set of digital samples from the AFE, and power off the analog circuits during a second time period after the first time period; and
a digital signal processor (DSP) coupled to the AFE, the DSP configured to be powered on during the first and second time periods and configured to pass the first set of digital samples through functions to generate time delays between transmission of GNSS signals from satellites and reception at the GNSS receiver.

9. The apparatus of claim 8, wherein the first software is configured to control the GNSS receiver to operate in a second mode, wherein the first circuit is configured to power on the analog circuits continuously during the second mode to generate a digital signal, and wherein the DSP is configured to process the digital signal
and/or
wherein the DSP is configured to adjust at least one of the functions between a first pass and a second pass of the first set of digital samples.

10. The apparatus of claim 8 or 9, wherein the first circuit is configured to, during the first time period, during the second time period, or both, at least one of reduce the power supplied to the DSP or reduce the frequency of a clock signal supplied to the DSP.

11. The apparatus of one of claims 8 to 10, wherein the first circuit is coupled to the DSP and is configured to, in response to an output from the DSP, at least one of reduce the power supplied to the DSP or reduce the frequency of a clock signal supplied to the DSP between a first pass and a second pass of the first set of digital samples.

12. A method of receiving a Global Navigation Satellite System (GNSS) signal, comprising:
observing, by an analog front-end (AFE) having analog circuits, a GNSS frequency;
powering on, by a first circuit coupled to the AFE, the analog circuits during a first time period to generate a first set of digital samples from the AFE; and
powering off, by a first circuit, the analog circuits in a second time period after the first time period;
powering on a digital signal processor (DSP) coupled to the AFE during the first and second time periods; and
processing, by a digital signal processor (DSP), the first set of digital samples through functions to generate time delays between transmission of GNSS signals from satellites and reception at the GNSS receiver.

13. The method of claim 12, wherein the DSP is configured to perform a first pass of the first set of digital samples through the functions during the first time period and perform another pass of the first set of digital samples through the functions during the second time period.

14. The method of claim 13, wherein the DSP is configured to adjust at least one of the functions between a first pass and a second pass of the first set of digital samples
and/or
wherein the first circuit is configured to, during the first time period, during the second time period, or both, at least one of reduce the power supplied to the DSP or reduce the frequency of a clock signal supplied to the DSP.

15. The method of one of claims 12 to 14, wherein the first circuit is coupled to the DSP and is configured to, in response to an output from the DSP, at least one of reduce the power supplied to the DSP or reduce the frequency of a clock signal supplied to the DSP between a first pass and a second pass of the first set of digital samples.
